# EUROPÄISCHE PATENTSCHRIFT

(11) **EP 0 990 339 B1**
(45) Veröffentlichungstag und Bekanntmachung des Hinweises auf die Patenterteilung: **11.12.2002**
(21) Anmeldenummer: 98933617.7
(22) Anmeldetag: 16.06.1998
(51) Int. Cl.: H04M 3/50

(54) **VERFAHREN ZUR DIALOGSTEUERUNG SPRACHGESTEUERTER INFORMATIONS- UND AUSKUNFTSDIENSTE UNTER EINBEZIEHUNG VON COMPUTERTELEFONIE**
CONVERSATIONAL PROMPTING METHOD FOR VOICE-CONTROLLED INFORMATION AND INQUIRY SERVICES INVOLVING COMPUTER TELEPHONY
PROCEDE DE COMMANDE DE DIALOGUE POUR SERVICE D'INFORMATION ET DE RENSEIGNEMENTS A COMMANDE VOCALE FAISANT APPEL A LA TELEPHONIE INFORMATISEE

(30) Priorität: 16.06.1997 DE 19725421
(43) Veröffentlichungstag der Anmeldung: 05.04.2000
(73) Patentinhaber: Deutsche Telekom AG, 53113 Bonn (DE)
(72) Erfinder: BRADEMANN, Lutz, D-13349 Berlin (DE); MÜLLER, Christel, D-15732 Schulzendorf (DE); MUNDIN, Thomas, D-15366 Neuenhagen (DE); PARUS, Hardy, D-12524 Berlin (DE); ZIEM, Thomas, D-16341 Zepernick (DE); WETZEL, Romeo, Peter, D-70197 Stuttgart (DE)
(86) Internationale Anmeldenummer: EP9803606
(87) Internationale Veröffentlichungsnummer: WO98058487

(56) Entgegenhaltungen:
- EP-A- 0 664 635
- WO-A-96/05685

## Beschreibung

Das erfindungsgemäße Verfahren bezieht sich auf die Dialogsteuerung zwischen einem Kunden und sprachgesteuerten Informations-, Nachrichten- und Verbindungsdiensten, die von Diensteanbietern/Providern als Diensteangebote bereitgestellt und über Computertelefonie realisiert werden.

Sprachverarbeitende Systeme, insbesondere im Bereich der Telekommunikation, finden eine immer größere Verbreitung. In den USA gehören viele solcher automatischen Informations-, Nachrichten- und Verbindungsdienste zum Alltag. Das ist u. a. ein wesentlicher Grund, weshalb sich auf diesem Markt bereits eine Vielzahl von Firmen etabliert hat, deren Produkte auf sprachverarbeitender Technologie beruhen.
Für die Realisierung solcher Dienste kommt den Softwarekomponenten mit ihrem Laufzeit-System und dem Dialogeditor eine wesentliche Bedeutung zu.

Verfahren und Systeme zur Steuerung automatisierter Telefondialoge gibt es schon seit ca. 20 Jahren. Dabei werden verschiedene Grundarchitekturen unterschieden. Bekannt sind
- Systeme und Verfahren, die ausschließlich den Sprachdatenstrom steuern, wie es beispielsweise bei Telefonvermittlungen der Fall ist und
- Systeme und Verfahren, die den Sprachdatenstrom selbst bearbeiten.

Systeme und Verfahren, die den Sprachdatenstrom selbst bearbeiten, sind auf den Dialog zwischen Mensch und Maschine ausgerichtet. Ein derartig konzipiertes Verfahren bzw. System ist um so besser, je näher es menschlichem Dialogverhalten und menschlicher Interaktion kommt. Natürlich können derartige Verfahren bzw. Systeme beispielsweise auch Telefonate steuern, also wählen, vermitteln u. ä. Die dabei angewendeten Verfahrensschritte entsprechen im Wesentlichen der Vorgehensweise eines menschlichen Benutzers beim Telefonieren.
Die Entwicklung derartiger Lösungen ist stufenweise von vollständig individuell programmierten Systemen zu mittels Skriptsprachen anwendungsorientiert programmierbarer Systeme erfolgt.

Die gegenwärtig bestehenden Systeme sind gekennzeichnet durch:
- textbasierte, Hardware-nahe Skriptsprachen,
- grafische Beschreibungssprachen, die im Nachgang auf die Skriptsprachen aufgesetzt wurden,
- Darstellung des Dialogs als streng hierarchisch aufgebaute Ablaufsequenz für die allgemeine Anwendung oder als regelbasierte linguistische Systeme für die Anwendung in der Forschung,
- Hardware-nahe Implementierung für jeweils spezifische Komponenten in einer geschlossenen Systemwelt,
- Sequentielle Entwicklungsprozesse mit schlechten Test- und Korrekturmöglichkeiten, und
- Komplexität der erstellten Anwendungen wegen fehlender Strukturierungsmittel bei der Anwendungsdefinition.

Aus WO 9605 685 ist ein Scriptsystem bzw. eine Scriptmethode bekannt, welche eine grafische Benutzeroberfläche bietet, die dem Benutzer die Erstellung, Bearbeitung und Ausführung von Telefonscripts für die Nutzung durch einen Agenten bei der Lieferung von Informationen an einen Kunden ermöglicht. In dem System wird eine grafischen WINDOWS ®Benutzeroberfläche zur Definition der Felder innerhalb eines Scripts und der Wechselbeziehungen der Felder eingesetzt. Die einzelnen Felder enthalten Aktionsobjekte wie einen Dialog für die Nutzung mit einem Kunden und mögliche Antworten auf Kundenfragen. Das System erlaubt dem Nutzer das Erstellen von Dialogen, die aus einer Datenbank gewonnene Informationen enthalten. Damit wird jedes Script weitgehend in Echtzeit kundenspezifisch gestaltet und beinhaltet Daten, die sich auf den einzelnen Kunden und den Agenten, der im Dialog mit dem Kunden steht, beziehen. Zusätzliche Aktionsobjekte, wie Kundenreaktionen, führen dazu, daß sich das Script in verschiedene Richtungen verzweigt, die vom Nutzer bestimmt werden. Das System kann entweder mit einem Hauptrechner und einer Vielzahl von Arbeitsplatzrechnern der Agenten realisiert werden oder es kann in einem Netz umgesetzt werden, in dem die Scripts in einem Netzserver enthalten und die Agentenarbeitsplätze an das Netz gekoppelt sind.

In EP 0 664 635 A2 wird ein automatisches Bestellsystem in Kommunikations-Vermittlungsanlagen beschrieben. An die Verbindung zu einem innerhalb des Vermittlungssystems vorgesehenen Bestellserver ist ein Spracherkenner angeschaltet. Dieser erkennt aus den von einem Benutzer über ein anrufendes Anschlußorgan abgegebenen Sprachäußerungen einzelne Schlüsselwörter und reizt eine im Bestellserver befindliche Dialogsteuerung an. Die Dialogsteuerung steuert daraufhin einen Rufnummernspeicher an, wobei eine dem erkannten Schlüsselwort entsprechende Rufnummer ausgelesen wird, die zum Aufbau einer Verbindung zu einer diese Bestellung annehmenden Stelle dient.

Die bekannten Systeme weisen jeweils in einzelnen Parametern gravierende Mängel auf. So sind Systeme mit sophistisierter Dialogsprache zumeist stark hardwareabhängig oder benötigen einen sehr hohen Rechenaufwand. Siehe Proceedings of Eurospeech "93" 2(3), CT. 943-946 "Dialogue Design Principles"

Systeme mit einer auf starke Parallelität und Massentelefonie ausgelegten Architektur sind in ihrer Architektur schwer zu ändern und außerdem sehr starr in ihrem Dialogverhalten.
Siehe Rabiner, Applications of Voice Processing to Telecommunications Proceedings of the IEEE, Vol. 82. No. 2, February 1994.

Der Erfindung liegt die Aufgabe zugrunde, ein Verfahren zur Steuerung der für den Dialog zwischen Mensch/Maschine notwendigen Hardwarekomponente anzugeben, das fiir das Betreiben sprachgesteuerter Informations-, Nachrichten- und Verbindungsdienste unter Einbeziehung von Computertelefonie (CTI) geeignet ist. Das Verfahren soll insbesondere für Informations-, Nachrichten- und Verbindungsdienste geeignet sein, die auf einer sehr starken Parallelität beruhen und die auf Massentelefonie ausgerichtet sind, wobei die dem Verfahren zugrunde liegende Architektur leicht erweiterbar und mit flexibler Dialogführung ausgebildet sein soll, so daß ein schneller Zugriff der Kunden auf die gewünschten Informationen möglich ist.

Das erfindungsgemäße Verfahren wird mittels eines von einem Diensteentwickler mit Hilfe eines grafischen Editors in Form eines Ablaufschemas erstellten Steuerprogramms realisiert, bei dem die Dialogführung Mensch/Maschine als Ablaufroutine so ausgebildet ist, daß eine gleichzeitige parallele Ansteuerung aller im Rahmen des konkreten Diensteangebotes an der Abfrage, und am Informationsaustausch mit dem Kunden beteiligten Informationseingabebaugruppen und Informationsausgabebaugruppen, und die Einzelabschaltung und ein ordnungsgemäßes Rücksetzen aller im Rahmen der Abfrage und des Informationsaustausches mit dem Kunden nicht mehr benötigten Baugruppen möglich ist.

Das als Ablaufschema konzipierte Steuerprogramm beruht auf dem Beschreiben der gewünschten Dialoge für den Informationsaustausch zwischen Mensch und Maschine mit Hilfe von Aktionen und bereits beschriebenen Subdialogen durch Definieren von Sequenzen von Aktionen, Kennzeichnen von parallelen Aktionen innerhalb eines Dialoges und-Definieren von allgemeinen Ereignisbehandlungen, Interpretieren der beschriebenen Dialoge auf einem Computersystem mit einem Steuermodul zur Steuerung der Ressourcen, das eine S.100-Schnittstelle /S.300-Schnittstelle zur Verfügung stellt, wobei das Interpretieren so oft wie notwendig unabhängig von der Anzahl der Telefonleitungen parallel durchgeführt wird.

Das nach den o.g. Prinzipien erstellte Steuerprogramm/Ablaufschema wird in das Konsol -Management eines Diensteanbieters/Providers integriert.

Wenn ein Anruf eines Kunden beim Diensteanbieter vorliegt, werden nach erfolgreicher Identifikation des Kunden gegenüber dem System des Diensteanbieters über das auf die jeweilige Anwendung zugeschnittene Steuerprogramm/Ablaufschema alle CTI- Informationseingabebaugruppen und CTI-Informationsausgabebaugruppen, die der Kunde zur Information und zur Kommunikation mit dem System und insbesondere zur Eingabe seines Informationswunsches benötigt, gestartet, so daß sie dem Kunden gleichzeitig zur Verfügung stehen.

Unter CTI-Baugruppen im erfindungsgernäßen Sinn werden
- Baugruppen zur Ausgabe von Informationen an den Kunden (Informationsausgabebaugruppen) und
- Baugruppen zur Eingabe von Informationen bzw. Wünschen des Kunden in das System (Informationseingabebaugruppen)
verstanden.

Zu den CTI-Baugruppen gehören beispielsweise
- Spracherkennungsbaugruppen/ ASR-Baugruppen
- Sprachausgabe-Baugruppen
- Telefax-Baugruppen
- Telefonie- Baugruppen
- Sprecherverifizierungs- Baugruppen

Als Informationsausgabebaugruppen zur Ausgabe von Informationen an den Kunden, z. B. Ansagetexten, eignen sich beispielsweise Player, in denen einzeln ansteuerbare Ansagetexte gespeichert sind.
Informationseingabebaugruppen zur Eingabe von Kundenwünsche können beispielsweise Tastaturen oder Baugruppen zur Spracherkennung sein.

Zur Erfassung der Kundenwünsche im Dialog Mensch/Maschine wird z. B. eine Baugruppe zur aktiven Spracherkennung (ASR-Baugruppe) gestartet und ebenfalls parallel zu den anderen CTI-Baugruppen dem Kunden zur Verfügung gestellt.

Das Ablaufschema ist so konzipiert, daß der Kunde bereits während der Begrüßung einen als Abfrageroutine ablaufenden Ansagetext mit Kundeninformationen, der von einer als Player ausgebildeten Sprachausgabe-Baugruppe zur Ausgabe von Ansagetexten abgespielt wird, aktiv unterbrechen kann, indem er über die ihm zur Verfügung stehenden Eingabemöglichkeiten, vorzugsweise Sprache, seinen Informationswunsch äußert. Über die parallel mitlaufende Spracherkennungsbaugruppe wird dieser Wunsch aufgenommen und mit gespeicherten Informationen verglichen. Wird ein Wunsch beispielsweise anhand eines vom Kunden geäußerten Schlagwortes erkannt, wird über das Steuerprogramm/Ablaufschema gesteuert sofort der Ansagetext unterbrochen und die Informationsausgabebaugruppe zurückgesetzt. Das Steuerprogramm/Ablaufschema ist prinzipiell so konzipiert, daß in dem Fall, daß eine der parallel zugeschalteten CTI- Baugruppen vom Kunden ausgelöst/angesprochen oder betätigt wurde, alle parallel zugeschalteten CTI-Baugruppen zurückgesetzt und abgeschaltet werden. Reicht die vom Kunden eingegebene Information bereits zur Ermittlung der vom Kunden gewünschten Information aus, so wird die gewünschte Information dem Kunden zur Verfügung gestellt. Das kann beispielsweise bei einem Ansagedienst per Sprachausgabe an den Kunden erfolgen.

Wenn die bisher vom Kunden eingegebene Information noch nicht ausreicht, um die vom Kunden gewünschte Information zu ermitteln, wird über das Steuerprogramm/Ablaufschema die Abfrageroutine erneut aktiviert, wobei wieder alle an der Kundenabfrage beteiligten CTI-Baugruppen, wie bereits beschrieben, erneut parallel gestartet und dem Kunden zur Verfügung gestellt werden. Die Informationsausgabebaugruppe, z.B. ein Player, wird an der Stelle des Ansagetextes gestartet, die auf die bereits vom Kunden erhaltene Information aufbaut mit dem Ziel, diese weiter zu präzisieren. Auch an dieser Stelle kann der Kunde den Ablaufprozeß der Abfrageroutine durch Eingabe einer weiteren, seinen Informationswunsch präzisierenden Information, wieder unterbrechen. Wie bereits bekannt, werden dann nach Eingabe einer über die Spracherkennungsbaugruppe (ASR-Baugruppe) als gültig erkannten Information des Kunden alle anderen parallel aktiven CTI-Baugruppen wieder ordnungsgemäß rückgesetzt und abgeschaltet.
Der Dialog wird nach den o.g. Prinzipien solange fortgesetzt, bis die vom Kunden gewünschte Information ermittelt werden kann. Auf Abbruchbedingungen der CTI-Baugruppen oder auf den vorzeitigen Abbruch durch Kundeneingabe kann global oder spezifisch im Dialog reagiert werden, was im Editor durch eine globale Dialbox ermöglicht wird.

Im nachfolgenden Ausführungsbeispiel wird das erfindungsgemäße Verfahren anhand der Beschreibung eines Dialogs zwischen einem Kunden und einem computertelefoniegestützten Auskunfts- und Informationsdienst eines Diensteanbieters/Providers näher erläutert.
- Fig. 1: zeigt den prinzipiellen Aufbau des Dialogssystems.
- Fig 2: zeigt den Aufbau fiir das Dialogsystem eines Informationsdienstes
- In Fig.3: werden anhand eines Ablaufchemas die einzelnen Verfahrensschritte des Dialogs zwischen Kunden und Dialogsystem am Beispiel des Informationsdienstes dargestellt.

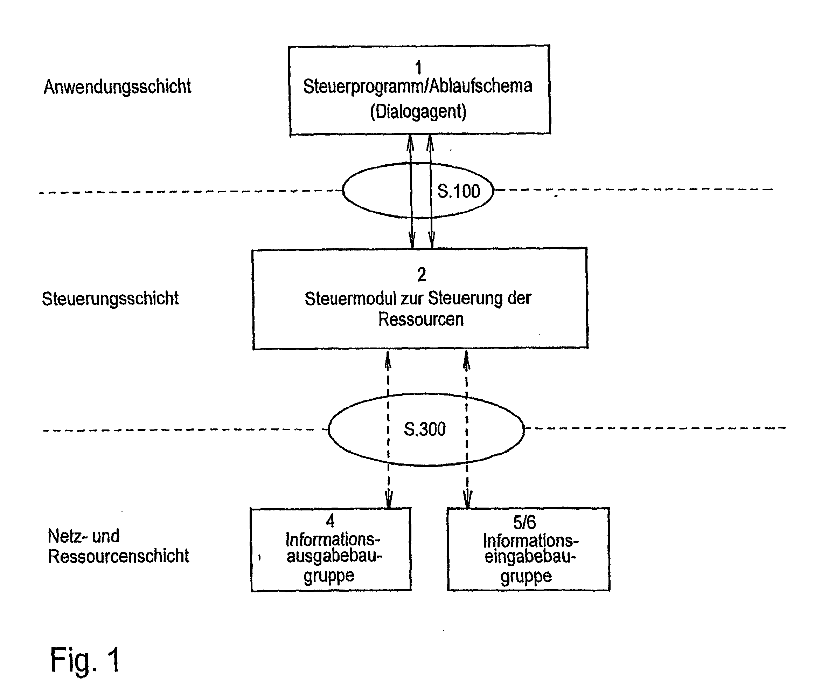

Entsprechend Fig. 1 enthält das Dialogsystem in der Anwendungsschicht ein Steuerprogramm/Ablaufschema, das als Dialogagent ausgebildet ist und die aktuelle Interpretation eines Dialogs darstellt. Die Anwendungsschicht ist über eine S.100-Schnittstelle mit dem der Steuerungsschicht zugeordneten Steuermodul zur Steuerung der Ressourcen verbunden. Die Steuerungsschicht ist über eine S.300-Schnittstelle mit der Netz- und Ressourcenschicht, bestehend aus den CTI-Informationsausgabebaugruppen und den CTI- Informationseingabebaugruppen, verbunden.

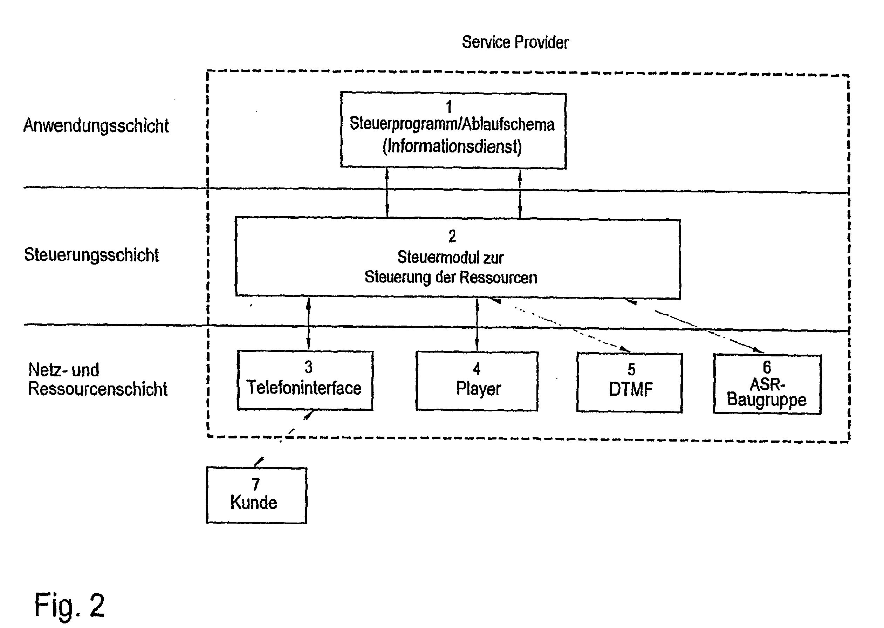

Fig. 2 zeigt eine Ausführungsform für einen Informationsdienst eines Service-Providers.
Das Steuerprogramm/Ablaufschema enthält als Applikation das Anwendungsprogramm fiir einen Informationsdienst. Das Steuermodul zur Steuerung der Ressourcen ist mit den Baugruppen Telefoninterface, ASR-Baugruppe zur Spracherkennung, DTMF-Baugruppen (**d**ual **t**one **m**ode **f**requency) und Player verbunden, wobei die Player als Informationsausgabebaugruppen und die ASR-Baugruppen und die DTMF-Baugruppen als Informationseingabebaugruppen konzipiert sind. Über die Baugruppe Telefoninterface wird die Verbindung zum Kunden hergestellt.

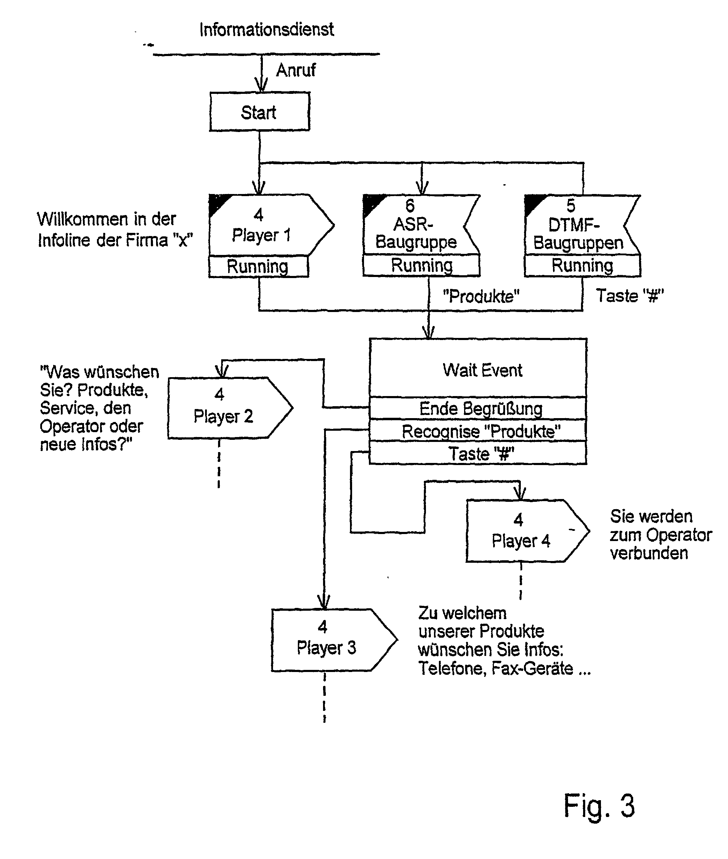

Anhand des Ablaufschemas nach Fig. 3 wird der Dialog eines Kunden mit dem System nachfolgend näher erläutert.
Ruft ein Kunde die Servicenummer des Diensteanbieters/Providers, so wird nach Herstellung der Verbindung und erfolgreicher Identifikation des Kunden gegenüber dem System des Diensteanbieters der Informationsdienst über das Steuerprogramm/Ablaufschema der Anwendungsschicht automatisch gestartet.
Dabei werden erfindungsgemäß sowohl die Ausgabebaugruppen Player 1, als auch die im Rahmen des Informationsdienstes vorgesehenen Eingabebaugruppen ASR-Baugruppe und DTMF- Baugruppe gleichzeitig parallel gestartet und über das Telefoninterface zum Kunden durchgeschaltet. Die Zustände der dem Kunden gleichzeitig parallel zur Verfügung stehenden Informationseingabebaugruppen und Informationsausgabebaugruppen unterliegen einer ständigen Überwachung.
Über den Player 1 wird an den Kunden ein Begrüßungstext, beispielsweise "Willkommen in der Infoline der Firma "X"....", ausgegeben.
Der Kunde hat die Möglichkeit, ab dem Moment, wenn ihm die Informationseingabe- und Informationsausgabebaugruppen zur Verfügung stehen, aktiv über die ASR-Baugruppe oder die DTMF-Baugruppen in die Dialogsteuerung einzugreifen, da die Zustände der Informationseingabe- und Informationsausgabebaugruppen ständig überwacht werden.

Entsprechend dem gewählten Beispiel ergeben sich für den Kunden mehrere Möglichkeiten zur aktiven Gestaltung des Dialogs im Rahmen des von ihm gewählten Informationsdienstes.
- Ein Kunde, der erstmalig den Informationsdienst in Anspruch nimmt, wird sich in der Regel den über Player 1 ausgegebenen Begrüßungstext bis zum Ende anhören. In diesem Fall werden nach Ende des Begrüßungstextes die ASR-Baugruppe und die DTMF-Baugruppe gestoppt und rückgesetzt. Ein Player 2 wird gestartet, über den an den Kunden ein weiterer Informationstext mit Angabe der im Rahmen des Informationsdienstes angebotenen Informationsinhalte , beispielsweise Informationen über Produkte, Service oder neue Infos ausgegeben werden.
- ein Kunde, der bereits mehrmalig den Informationsdienst in Anspruch genommen hat, kann während des Ablaufes des Begrüßungstextes aktiv in die Dialogführung eingreifen, da er in der Regel die im Rahmen des Informationsdienstes angebotenen Sachgebiete kennt. So kann er durch eine Spracheingabe, beispielsweise des Wortes "Produkte" den Begrüßungstext unterbrechen. Das vom Kunden per Sprache eingegebene Wort wird über die ASR-Baugruppe mit den für die Unterbrechung des Begrüßungstextes zulässigen Worten verglichen und als zulässig erkannt. Über das Steuermodul zur Steuerung der Ressourcen werden der Player 1, die ASR-Baugruppe und die DTMF-Baugruppen zurückgesetzt und abgeschaltet. Der Player 3, der Informationen zur Produktpalette der Firma X, wie beispielsweise zu Telefonen und Fax-Geräten enthält, wird gestartet und zum Kunden durchgeschaltet. Gleichzeitig mit dem Player 3 werden wieder die ASR-Baugruppe und die DTMF-Baugruppen parallel gestartet und zum Kunden durchgeschaltet. Der Kunde kann aus der Produktpalette das gewünschte Produkt auswählen und seinen Wunsch per Sprachinformation eingeben. Über den Player 3 wird die gewünschte Information an den Kunden ausgegeben.

Eine weitere Möglichkeit des Kunden in den Dialog einzugreifen wird darin gesehen, dem Kunden zusätzlich eine Funktion anzubieten, über die er manuell, beispielsweise mittels Betätigung einer Taste seines Telefons oder seines PC, in den Dialog eingreifen kann. In der in Fig. 3 dargestellten Ausführungsform kann der Kunde sowohl per Spracheingabe, als auch manuell per Tastendruck über eine Telefontaste in den Dialog eingreifen. Die manuelle Eingabe per Telefontaste oder auch per Tastatur eines Rechners ist insbesondere für den Fall vorgesehen, daß der Kunde Schwierigkeiten hat und eine Verbindung zu einem Operator wünscht. Wenn der Kunde, beispielsweise während des Ablaufes des Begrüßungstextes, die Taste seines Telefons betätigt, der eine dementsprechende Funktion zugeordnet wurde, wird das über die DTMF-Baugruppe erkannt. Vor Start des Players 4, der die Information über die Verbindung zum Operator beinhaltet, werden der Player 1 und die ASR-Baugruppe gestoppt und rückgesetzt. Der Kunde wird nach Ausgabe der Sprachinformation des Player 4 automatisch mit dem Operator verbunden.

Das für die Steuerung des Dialoges nach den Prinzipien
a) Beschreiben der gewünschten Dialoge mit Hilfe von Aktionen und bereits beschriebenen Dialogen durch Definieren von Sequenzen von Aktionen, Kennzeichnen von parallelen Aktionen innerhalb eines Dialogs, Definieren von allgemeinen Ereignisbehandlungen, und
b) paralleles Interpretieren der beschriebenen Dialoge, so oft wie notwendig, unabhängig von der Anzahl der Telefonleitungen
strukturierte Dialogsystem läßt sich in Bezug auf seine Effektivität noch erhöhen.

Eine besondere Übersichtlichkeit und einfache Handhabung des Dialogablaufs ist insbesondere dann gegeben, wenn die gewünschten Dialoge grafisch geschrieben sind.

Die Anwendungsbreite des Dialogs läßt sich dadurch erhöhen, daß Dialoge mit Unterdialogen beschrieben sind, die über eine Subdialog-Aktion in andere Dialoge aufgenommen werden können.

Eine zweckmäßige Ausgestaltung der Dialogführung besteht auch darin, daß parallele Interpretationen (Telefonagenten) der Dialoge untereinander kommunizieren und Daten austauschen können.
Falls Dialoge mit Unterdialogen beschrieben sind, die über eine Subdialog-Aktion in andere Dialoge aufgenommen werden können, ist es von Vorteil, wenn jede Subdialog-Aktion mit dem zugehörigen Subdialog hinsichtlich der Eingangs- und Ausgangsereignisse, sowie der Parameter automatisch abgeglichen wird.

Weiterhin ist es vorteilhaft, eine Möglichkeit vorzusehen, Dialoge grafisch interaktiv zu testen und Fehler bereinigen zu können.

Insbesonders bei der Nutzung durch mehrere unterschiedliche Benutzer ist es von Vorteil, wenn die einzelnen Aktionen dokumentiert werden können.

Eine weitere vorgesehene Vereinfachung bei der Anwendung besteht darin, die Aktionen mit Hilfe von Parametern zu konfigurieren.
Vorteilhaft ist es auch, Sprachdaten direkt innerhalb der grafischen Entwicklungsumgebung zu bearbeiten.

Bei sehr umfangreichen Anwendungen bietet es sich an, das Interpretieren der Dialoge mit Hilfe eines Netzmanagementprotokolls über ein Rechnernetz zu steuern.

Die Interpretation der Dialoge für die Realisierung des erfindungsgemäßen Verfahrens geschieht nach folgendem Algorithmus:
1. Es wird eine globale Variablentabelle angelegt.
2. Der Dialog wird geladen, d.h. die Datei mit der Dialogbeschreibung wird gelesen und aufgrund des Inhaltes ein Netz von Aktionsobjekten eingerichtet. Die einzelnen Aktionsobjekte beinhalten die vom Benutzer definierten Parameter, eine Liste von Eingangsereignissen, eine Liste von Ausgangsereignissen, eine boolsche Variable, ob diese Aktion parallel ist und für diesen Fall einen parallelen Ausgang. Außerdem werden durch den Typ der Aktion die drei Arbeitsfunktionen für das Betreten der Aktion, das Warten auf Ereignisse und das Verlassen der Aktion festgelegt.
3. Nach Aktivierung des Dialogs wird für jeden gewünschten Dialogagent eine parallele Interpretation des Dialogs gestartet, die in den folgenden Schritten beschrieben ist. Jeder Agent agiert weitgehend unabhängig von den parallel aktiven Agenten. Das Gesamtsystem kann jederzeit um weitere Agenten erweitert oder nach Beenden aller Agenten beendet werden. Das Beenden eines Agenten kann auch von außen durch Setzen einer Beendenflagge für diesen Agenten erzwungen werden (Smart Shutdown). Soll das Gesamtsystem beendet werden, so werden erst alle Agenten beendet.
4. Es wird für diesen Dialogagent, d. h. die aktuelle Interpretation dieses Dialogs, eine Verbindung zum S.100/S.300-Server aufgebaut und abhängig von den CTI-Baugruppenanforderungen auf die Übergabe einer CTI-Baugruppe, z. B. durch einen Telefonanruf, gewartet.
5. Der Start des ersten Subdialogs wird gesucht, die Liste der aktuellen Dialogzustände geleert und dann mit einem auf diesen Start eingerichteten Dialogzustand gefüllt.
6. Die Punkte 7.-9. werden in einer Schleife solange abgearbeitet, bis sich alle Dialogzustände in einem terminalen Zustand befinden. Dann werden alle Dialoglzustände gelöscht und die Interpretation erneut bei Punkt 5 aufgenommen, falls mindestens einmal eine Wartesituation bei den Schritten 7 - xx. durchlaufen wurden. Andernfalls wird die Interpretation im Rahmen dieses Dialogagenten beendet.
7. Jeder Dialogzustand wird der Reihe nach geprüft:
   i. Befindet er sich im Zustand 'Exiting', so wird eine Beenden-Flagge gesetzt, die das Beenden der gesamten Dialoginterpretation einleitet (Smart Shutdown).
   ii. Befindet er sich im Zustand 'Progressing', so wird erst die Exit-Funktion der zugehörigen Aktion ausgeführt. Dann werden die Ausgangsbedingungen geprüft und das geeignete Ausgangsereignis ausgewählt. Die Berechnung ermittelt die Folgeaktion und dessen Eingangsereignis und ändert die Angaben im Dialogzustand entsprechend ab. In der jetzt aktuellen Aktion wird die Eintrittsfunktion ausgeführt und dann für diesen Dialogzustand der aktuelle Schritt 7 wiederholt
      Besonderheiten:
      a) Bei SUBDIAL/START Aktionen wird ein neuer Variablenraum fiir lokale Variablen angelegt und dort ein Verweis auf den übergeordneten Variablenraum und die rufende SUBDIAL Aktion eingetragen.
      b) Bei RETURN Aktionen werden alle Dialogzustände überprüft, ob sie oder ihre aufrufenden Vorgänger denselben lokalen Variablenraum benutzen. In diesem Fall handelt es sich um parallele Abläufe, die mit dieser Return Aktion beendet werden. Dazu wird bei diesen Dialogzuständen der Zustand auf 'Aborting' gesetzt und die jeweiligen Abbruchfünktionen der zugehörigen Aktionen gerufen. Dann werden die Parameter in die lokalen Variablen des aufrufenden Dialoges übertragen, die lokale Variablenstruktur freigegeben und mit dem Ausgang der rufenden SUBDIAL Aktion fortgefahren.
      c) Bei STOP Aktionen wird der Zustand auf "Exiting" gesetzt.

   i. Befindet sich der Dialogzustand im Zustand "Wait Event", so werden alle Ausgangsbedingungen dieses Zustandes überprüft. Ist eine von ihnen wahr, so wird für den aktuellen Dialogzustand der Folgezustand wie unter i. beschrieben ermittelt.
   ii. Befindet sich der Dialogzustand im Zustand 'Waiting' und ist die Beenden-Flagge gesetzt, so wird der Zustand 'Aborting' gesetzt und die Abbruch-Funktion der zugehörigen Aktion gerufen.
   iii. Ansonsten bleibt der Dialogzustand unberührt.
8. Ist die Beenden-Flagge gesetzt und sind alle Zustände in einem terminalen Zustand, so wird der Interpreter beendet. Dazu werden die Datenstrukturen der Variablen abgebaut und eventuell offene Verbindungen zum S.100/S.300- System oder zu Datenbanken etc. beendet und dann die Datenstrukturen dieses Agenteneintrages freigegeben.
9. Ist einer der Dialogzustände im Zustand 'Waiting', so wird jetzt auf ein externes Ereignis (von S.100/S.300, Zeitgeber, anderem Agent, anderem Prozeß) einer CTI-Baugruppe gewartet und sobald dieses eintritt der Reihe nach alle Dialogzustände überprüft, bis eine Ereignisbehandlungsfunktion einer zugehörigen Aktion die Verarbeitung der Ereignisnachricht durch Rückgabe eines positiven Wahrheitswertes bestätigt.
10.Soll der Prozeß der Interpretation von extern gesteuert werden, so kann eine globale Beenden-Flagge gesetzt werden, die unter Schritt 7 das Beenden aller aktiven Dialogzustände durch Setzen der Beendenflagge und Ausführen der Abbruchfunktion veranlaßt. Der Interpreter läuft solange weiter bis alle Dialogzustände in einem terminalen Zustand sind, d. h. im Zustand 'beendet' oder sich selbst gelöscht haben.

Das dem Ablaufschema des Dialogsystems zugrunde liegende Wirkprinzip zeichnet sich durch eine grafische benutzerfreundliche Architektur mit integrierter Laufzeitumgebung für massiv parallele Computertelefonie aus. Wesentliche konzeptionelle Bestandteile des Ablaufschemas sind der Aufbau nach einer Klassenhierarchie, die einerseits Dialogabläufe und andererseits grafische und beschreibende Elemente enthält, die Strukturierung der Dialogbeschreibungen in Seiten, die Unterstützung von Bibliotheken, die Integration der Sprachdatenbearbeitung und die auf dem S.100/S.300- Standard beruhende Systemarchitektur mit den Ein- und Ausgabebaugruppen zur Integration der Komponenten Editor, Debugger und Runtime sowie weiterer Hilfskomponenten.

## Patentansprüche

1. Verfahren zur Dialogsteuerung sprachgesteuerter Informations-, Nachrichten- und Verbindungsdienste unter Einbeziehung von Computertelefonie, bei dem bei Anruf eines Kunden nach Prüfung der Zugangsberechtigung ein mit Hilfe eines grafischen Editors als Ablaufschema erstelltes Steuerprogramm zur Dialogsteuerung gestartet wird, und bei dem die Dialogführung servergesteuert mittels einer sprecherunabhängigen Spracherkennungsbaugruppe erfolgt, welche aufschlüsselworte reagiert,
**dadurch gekennzeichnet,**
- **daß** die Interpretation der Dialoge des als Ablaufschema erstellten Steuerprogramms nach dem Algorithmus
a) Beschreiben der gewünschten Dialoge mit Hilfe von Aktionen und bereits beschriebenen Subdialogen durch Definieren von Sequenzen von Aktionen, kennzeichnen von parallelen Aktionen innerhalb eines Dialogs, Definieren von allgemeinen Ereignisbehandlungen, und
b) paralleles Interpretieren der beschriebenen Dialoge bzw. Dialogschritte so oft wie notwendig, unabhängig von der Anzahl der Telefonleitungen, auf einem Computersystem mit einem Steuermodul mit S.100- und S.300- Schnittstelle, erfolgt,
- **daß** über das als Steuerprogramm konzipierte Ablaufschema (1) ein Steuermodul zur Steuerung der Ressourcen (2) angesteuert wird, über das dem Kunden alle im Rahmen der jeweiligen Dialogführung vorgesehenen CTI- Informationseingabebaugruppen ( 5;6) und Informationsausgabebaugruppen (4) gleichzeitig parallel zur Verfügung gestellt werden, wobei sie einer permanenten Zustandsüberwachung unterliegen,
- **daß** über die Informationsausgabebaugruppen (4) automatisch ein als Abfrageroutine ausgebildeter Ansagetext mit Bedieninformationen, welcher logisch mit dem Ablaufschema verknüpft ist, gestartet und an-den Kunden ausgegeben wird,
- **daß** bei Eingabe einer Information durch den Kunden über eine der aktivierten Informationseingabebaugruppen (5;6), sowohl während, als auch nach Ausgabe der Bedieninformationen, nach Vergleich der Information mit im Rahmen der Abfrageroutine zugelassenen Informationsinhalten bei Zulässigkeit über das Steuermodul zur Steuerung der Ressourcen (2) alle dem Kunden zur Verfügung stehenden CTI- Informationseingabe- und Ausgabebaugruppen (4;5;6) gestoppt und rückgesetzt werden, und
- **daß** dem Kunden für den Fall, daß die von ihm eingegebene Information zur Erfüllung seines Informationswunsches noch nicht ausreicht, erneut über das als Ablaufschema ausgebildete Steuerprogramm in Verbindung mit dem Steuermodul zur Steuerung der Ressourcen (1) alle CTI- Informationseingabe- und Ausgabebaugruppen (4;5;6) gleichzeitig parallel zur Verfugung gestellt werden, daß die Informationsausgabebaugruppe (4) mit dem Ansagetext startet, der auf die vom Kunden bereits eingegebene Information aufbaut, und daß der Kunde wiederum den ablaufenden Ansagetext durch Eingabe einer weiteren, seinen Informationswunsch präzisierenden Information aktiv unterbrechen kann, wobei nach Erkennung einer gültigen Information erneut alle parallel zugeschalteten Informationseingabe-und Ausgabebaugruppen (4;5;6) gestoppt und rückgesetzt werden, und
**daß** der Dialogprozeß durchgeführt wird, bis
a) die vom Kunden eingeholten Informationen alle für die Erfüllung des Kundenwunsches notwendigen Angaben enthalten bzw.
b) vom Kunden ein Abbruchbefehl über eine ihm zugeordnete Informationseingabebaugruppe (5;6) ausgelöst wird.

2. Verfahren nach Anspruch 1, **dadurch gekennzeichnet, daß** einem vom Kunden (7) über Spracheingabe einzugebenden Wort bzw. einer Taste des Endgerätes des Kunden (7) eine Funktion zugeordnet ist, durch die bei Erkennung bzw. Auslösung über das Steuermodul zur Steuerung der Ressourcen (2) eine Verbindung zu einem Operator des Diensteanbieters hergestellt wird.

## Claims

1. Process for the interactive control of voice-controlled information, message and connection services with the inclusion of computer telephony in which, when a customer calls, after verification of access authorization, a control program for interactive control, created as a flow schematic with the aid of a graphical editor, is started and in which interactive prompting is server-controlled by means of a speaker-independent voice recognition module which reacts to keywords,
**characterized in that**
- the interactive dialogues of the control program created as a flow schematic are interpreted according to the algorithm
a) describing of the desired interactive dialogues with the aid of actions and already described subdialogues through the defining of sequences of actions, identification of parallel actions within an interactive dialogue, defining of general treatments of events, and
b) parallel interpretation of the described interactive dialogues or interactive dialogue steps as often as required, irrespective of the number of telephone lines, on a computer system with a control module with S. 100 and S.300 interfaces,
- the flow schematic (1) designed in the form of a control program is used to activate a control module for controlling the resources (2), said control module providing the customer simultaneously in parallel with all the CTI information input modules (5; 6) and information output modules (4) envisaged within the framework of the respective interactive prompting, said modules being subject to permanent status monitoring,
- the information output modules (4) automatically start and output to the customer an announcement text with user information, said announcement text being in the form of an inquiry routine and being logically linked to the flow schematic,
- when the customer inputs an item of information via one of the activated information input modules (5; 6), both during and after output of the user information, after comparison of the item of information with information contents allowed within the framework of the inquiry routine, if the item of information is allowable, the control module for controlling the resources (2) stops and resets all CTI information input and output modules (4; 5; 6) available to the customer, and
- in the event that the item of information inputted by the customer is not sufficient to meet his information requirements, the control program in the form of a flow schematic, in conjunction with the control module for controlling the resources (1), once again provides the customer simultaneously in parallel with all the CTI information input and output modules (4; 5; 6), wherein the information output module (4) starts with the announcement text which builds on the information already inputted by the customer, wherein the customer, in turn, is able actively to interrupt execution of the announcement text by inputting a further item of information more precisely describing his information requirements, wherein, after recognition of a valid item of information, once again all parallel connected information input and output modules (4; 5; 6) are stopped and reset, and
the interactive process is performed until
a) the information obtained by the customer contains all the information required for meeting the customer's requirements or
b) the customer triggers an abort command via an information input module (5; 6) assigned to him.

2. Process according to claim 1, **characterized in that** a word to be inputted by voice input by the customer (7) or a key of the terminal device of the customer (7) is associated with a function which, upon recognition or activation respectively, establishes a connection to an operator of the service provider via the control module for controlling the resources (2).

## Revendications

1. Procédé de commande de dialogue pour services d'informations, de renseignements et de connexions à commande vocale en faisant appel à la téléphonie informatisée, capable de lancer, suite à un appel d'un client et après vérification de son autorisation d'accès, un programme de commande de dialogue élaboré à l'aide d'un éditeur graphique sous forme d'organigramme et dans lequel la commande du dialogue est pilotée par ordinateur au moyen d'un module de reconnaissance vocale indépendant de tout locuteur et réagissant à des mots-clés,
**caractérisé en ce que**
- l'interprétation des dialogues par le programme de commande élaboré sous forme d'organigramme se fait à l'aide de l'algorithme
a) décrire les dialogues demandés au moyen d'actions et de sous-dialogues déjà décrits par définition de séquences d'actions, caractérisation d'actions parallèles à l'intérieur d'un dialogue, définition du traitement général d'événements et
b) en parallèle, interpréter les dialogues ou séquences de dialogues décrits autant de fois que nécessaire et indépendamment du nombre de lignes de téléphone sur un système d'ordinateur équipé d'un module de commande fonctionnant avec une interface S.100 et S.300,
- l'organigramme (1) conçu comme programme de commande sélectionne un module de commande de gestion de ressources (2) qui propose, simultanément et en parallèle, tous les modules d'entrée (5 ;6) et de sortie (4) vocales CTI au client prévues dans le cadre du service vocal, lesdits modules étant soumis à contrôle constant d'état ;
- les modules de sortie vocale (4) génèrent automatiquement un message d'annonce conçu comme routine d'interrogation et comprenant des instructions de service reliées logiquement avec l'organigramme et le proposent au client ;
- au moment de l'entrée d'une information par le client, tous les modules d'entrée et de sortie vocales CTI (4 ;5 ;6) disponibles pour le client sont, après vérification de l'admissibilité de ladite information, arrêtés et remis à zéro au moyen d'un des modules d'entrée d'informations (5 ;6) tant durant qu'après l'émission des instructions de service et après comparaison de l'information entrée avec les contenus d'information admis par la routine d'interrogation au moyen du module de commande de la gestion des ressources (2) ;
- qu'au cas où l'information entrée par le client serait insuffisante pour satisfaire son souhait d'information, tous les modules d'entrée et de sortie vocales CTI lui sont à nouveau proposés simultanément et en parallèle par le programme de commande conçu comme organigramme en association avec le programme de commande de gestion de ressources (1), que le module de sortie vocale (4) lance le message d'annonce qui prend appui sur l'information déjà entrée par le client et que ledit client peut à nouveau interrompre le déroulement dudit message en entrant une information additionnelle précisant son souhait d'information, tous les modules d'entrée et de sortie vocales (4 ;5 ;6) étant arrêtés et remis à zéro dès qu'une information valable a été reconnue et que le processus conversationnel est exécuté aussi longtemps que
a) les informations obtenues par le client comportent tous les éléments nécessaires à satisfaire son souhait d'information ou
b) le client déclenche une commande de fin de conversation par l'intermédiaire d'un module d'entrée vocale lui étant affecté (5 ;6).

2. Procédé selon la revendication 1, **caractérisé en ce qu**'une fonction est affectée à un mot à saisir par la voix du client (7) ou à une touche du terminal du client (7) permettant de réaliser une connexion avec l'opérateur du fournisseur de services dès que le mot a été reconnu ou que le module de commande de la gestion des ressources (2) a été activé.
